(19) 

**Europäisches Patentamt**
**European Patent Office**
**Office européen des brevets**

(11) **EP 3 645 977 B1**

(12) **EUROPÄISCHE PATENTSCHRIFT**

(45) Veröffentlichungstag und Bekanntmachung des Hinweises auf die Patenterteilung:
**30.11.2022 Patentblatt 2022/48**

(21) Anmeldenummer: **18722543.8**

(22) Anmeldetag: **07.05.2018**

(51) Internationale Patentklassifikation (IPC):
**G01D 5/20** (2006.01)   **G01P 3/487** (2006.01)
**G01P 3/488** (2006.01)   **G01B 7/30** (2006.01)

(52) Gemeinsame Patentklassifikation (CPC):
**G01D 5/2053; G01B 7/30; G01D 5/2046;**
**G01P 3/487; G01P 3/488**

(86) Internationale Anmeldenummer:
**PCT/EP2018/061673**

(87) Internationale Veröffentlichungsnummer:
**WO 2019/001811 (03.01.2019 Gazette 2019/01)**

(54) **SENSORSYSTEM ZUR BESTIMMUNG MINDESTENS EINER ROTATIONSEIGENSCHAFT EINES ROTIERENDEN ELEMENTS**

SENSOR SYSTEM FOR DETERMINING AT LEAST ONE ROTATION CHARACTERISTIC OF A ROTATING ELEMENT

SYSTÈME DE DÉTECTION POUR DÉTERMINER AU MOINS UNE PROPRIÉTÉ DE ROTATION D'UN ÉLÉMENT EN ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2017 DE 102017211190**

(43) Veröffentlichungstag der Anmeldung:
**06.05.2020 Patentblatt 2020/19**

(73) Patentinhaber: **Robert Bosch GmbH**
**70442 Stuttgart (DE)**

(72) Erfinder:
• **UTERMOEHLEN, Fabian**
**71229 Leonberg (DE)**
• **OSHINUBI, Dayo**
**71277 Rutesheim (DE)**

(56) Entgegenhaltungen:
EP-A1- 2 851 655     EP-A2- 0 743 508
WO-A1-02/16864     WO-A1-2016/079465
DE-A1-102004 057 205     US-A1- 2009 261 844

## Beschreibung

Stand der Technik

Aus dem Stand der Technik sind zahlreiche Sensoren bekannt, welche mindestens eine Rotationseigenschaft rotierender Elemente erfassen. Beispiele derartiger Sensoren sind in Konrad Reif (Hrsg.): Sensoren im Kraftfahrzeug, 2. Auflage, 2012, Seiten 63-74 und 120-129 beschrieben. Beispielsweise kann eine Lage einer Nockenwelle einer Brennkraftmaschine relativ zu einer Kurbelwelle mit einem so genannten Phasengeber mittels eines Hall-Sensors bestimmt werden.

Typischerweise wird auf der sich drehenden Achse ein Geberrad angebracht. Auf dem Geberrad können sich Zähne befinden, die durch den Hall-Sensor abgetastet werden, wenn sich die Nockenwelle dreht. So wird in der DE 10 2012 213 539 A1 ein Verfahren zur Bestimmung einer Phasenlage einer verstellbaren Nockenwelle einer Brennkraftmaschine, die ein Geberrad und einen Nockenwellenversteller umfasst, beschrieben. Die Phasenlage der Nockenwelle wird anhand von durch das Geberrad ausgelösten Phasenflankeninterrupts und eines Modells, das abhängig von mindestens einer Betriebskenngröße des Nockenwellenverstellers ist, bestimmt.

In der US 2013 0057263 wird ein System zur Positionserkennung beschrieben, welches eine Inkrementalspur mit einer Mehrzahl von Sektoren und ein untergeordnetes Messsystem umfasst. Das Messsystem umfasst mindestens zwei getrennte Leseköpfe, die jeweils mindestens eine Primärspule und mindestens zwei getrennte Sekundärspulen umfassen. Die Sekundärspulen generieren Ausgangssignale, deren Amplitude durch die Sektoren der Inkrementalspur moduliert werden.

Trotz der durch derartige Sensorvorrichtungen bewirkten Verbesserungen besteht nach wie vor ein Verbesserungspotenzial. Eine Herausforderung bei vielen bekannten Verfahren besteht weiterhin darin, eine kontinuierliche Positionserfassung oder eine absolute Positionsbestimmung zu ermöglichen. Oftmals ist eine absolute Positionsbestimmung nur in einem dynamischen Fall, bei Drehung des Geberrads möglich. Wünschenswert wäre jedoch eine instantane Ermittlung einer Winkelposition beim Einschalten der Spannungsversorgung, also eine True-Power-On-Funktion. Insbesondere ist oftmals bei einem Start eines Motors der Brennkraftmaschine eine Position nicht exakt bekannt. Eine Drehzahlmessung ist oft erst nach Passieren von mindestens zwei Zahnflanken möglich. Zudem weisen derartige Verfahren in vielen Fällen eine hohe Empfindlichkeit gegenüber magnetischen Störfeldern auf. Bei Verfahren, bei welchen eine Winkelposition bestimmt wird, und bei entsprechenden Sensorvorrichtungen wird jedoch in vielen Fällen ein komplexer Rechenalgorithmus benötigt, um die Rotationseigenschaft, beispielweise die Winkelposition, aus den erfassten Signalen zu bestimmen.

Aus der DE 10 2004 057 205 A1 ist ein Positionsdetektor zur Bestimmung mindestens einer Rotationseigenschaft eines um mindestens eine Rotationsachse rotierenden Elements bekannt, der ein mit dem rotierenden Element verbindbares Geberrad mit einem Geberradprofil aufweist. Der Positionsdetektor weist einen induktiven Positionssensor mit einer Spulenanordnung auf, welche eine Erregerspule und zwei zumindest abschnittsweise sinusförmige Empfängerspulen umfasst.

Weitere Sensorsysteme zur Bestimmung mindestens einer Rotationseigenschaft eines um mindestens eine Rotationsachse rotierenden Elements mit Erregerspulen und Empfängerspulen sind aus den Druckschriften EP 2 851 655 A1, WO 02/16864 A1, EP 0 743 508 A2, WO 2016/079465 A1 und US 2009/261844 A1 bekannt.

Offenbarung der Erfindung

Die Erfindung wird durch die unabhängigen Ansprüche 1 und 6 definiert. Das erfindungsgemäße Sensorsystem (110) weist mindestens zwei Geberräder (114) auf, wobei die Geberräder (114) unterschiedliche Geberradprofile (116) aufweisen. Im nachfolgenden Text sind Beispiele, die diese Merkmale nicht enthalten, nicht Teil der Erfindung.

Soweit in der Beschreibung Merkmale der unabhängigen Ansprüche als optional dargestellt werden, soll dies nicht als beabsichtigte Erweiterung des Schutzumfangs verstanden werden. Der Schutzumfang ist ausschließlich durch die Ansprüche definiert.

Im Rahmen der vorliegenden Erfindung wird daher ein Sensorsystem zur Bestimmung mindestens einer Rotationseigenschaft eines rotierenden Elements vorgeschlagen. Unter einem "Sensorsystem" wird im Rahmen der vorliegenden Erfindung grundsätzlich eine beliebige Vorrichtung verstanden, welche geeignet ist, mindestens eine Messgröße zu erfassen. Unter einem Sensorsystem zur Bestimmung mindestens einer Rotationseigenschaft wird dementsprechend ein Sensorsystem verstanden, welches eingerichtet ist, um die mindestens eine Rotationseigenschaft zu erfassen, beispielsweise zu messen, und welche beispielsweise mindestens ein elektrisches Signal entsprechend der erfassten Eigenschaft erzeugen kann, wie beispielsweise eine Spannung oder einen Strom. Auch Kombinationen von Eigenschaften können erfassbar sein. Unter einer "Rotationseigenschaft" wird im Rahmen der vorliegenden Erfindung grundsätzlich eine Eigenschaft verstanden werden, welche die Rotation des rotierenden Elements zumindest teilweise beschreibt. Hierbei kann es sich beispielsweise um eine Winkelgeschwindigkeit, eine Drehzahl, eine Winkelbeschleunigung, eine Winkelposition oder eine andere Eigenschaft handeln, welche eine kontinuierliche oder diskontinuierliche, gleichförmige oder ungleichförmige Rotation oder Drehung des rotierenden Elements zumindest teilweise charakterisieren kann. Beispielsweise kann es sich bei der Rotationseigenschaft um eine Position, insbesondere eine Winkelposition, eine Drehzahl, eine Winkelbeschleunigung oder um eine Kombination von mindestens zwei dieser Größen handeln. Auch andere Eigenschaften und/oder andere Kombinationen von Eigenschaften können erfassbar sein. Unter einer "Winkelposition" wird im Rahmen der vorliegenden Erfindung grundsätzlich ein Drehwinkel einer rotationsfähigen Vorrichtung, beispielsweise des rotierenden Elements oder des Geberrads, bezüglich einer senkrecht auf der Rotationsachse stehenden Achse verstanden.

Das Sensorsystem kann insbesondere zum Einsatz in einem Kraftfahrzeug eingerichtet sein. Unter einem "rotierenden Element" wird im Rahmen der vorliegenden Erfindung grundsätzlich ein beliebiges Element verstanden, welches um mindestens eine Achse rotiert. Beispielsweise kann das rotierende Element eine Welle sein, beispielsweise eine Welle in einer Antriebsmaschine, beispielsweise eine Nockenwelle oder eine Kurbelwelle. Beispielsweise kann eine Winkelposition einer Nockenwelle oder eine Drehzahl einer Nockenwelle oder eine Winkelbeschleunigung einer Nockenwelle oder eine Kombination von mindestens zwei dieser Größen bestimmt werden. Auch andere Eigenschaften und/oder andere Kombinationen von Eigenschaften können erfassbar sein.

Das Sensorsystem zur Bestimmung mindestens einer Rotationseigenschaft eines um mindestens eine Rotationsachse rotierenden Elements weist mindestens ein mit dem rotierenden Element verbindbares Geberrad auf. Das Geberrad kann beispielsweise permanent oder reversibel mit dem rotierenden Element verbunden oder verbindbar sein oder kann auch einstückig mit dem rotierenden Element ausgebildet oder in das rotierende Element integriert sein.

Das Geberrad weist ein Geberradprofil auf. Das Geberradprofil kann insbesondere mindestens ein Profilelement aufweisen. Erfindungsgemäß weist das Sensorsystem mindestens zwei Geberräder auf. Insbesondere können die mindestens zwei Geberräder bezüglich der Rotationsachse zueinander versetzt angeordnet sein, also beispielsweise mit einem axialen Versatz. Die mindestens zwei Geberräder weisen unterschiedliche Geberradprofile auf.

Das Sensorsystem weist weiterhin mindestens einen induktiven Positionssensor auf. Der induktive Positionssensor weist mindestens eine Spulenanordnung auf. Die Spulenanordnung umfasst mindestens eine Erregerspule, auch als Sendespule bezeichnet, und mindestens zwei Empfängerspulen, auch als Empfangsspulen bezeichnet. Die mindestens zwei Empfängerspulen können beispielsweise mindestens ein Empfängerspulensystem bilden. Beispielsweise können ein oder mehrere Empfängerspulensysteme vorgesehen sein, welchen jeweils eine oder mehrere Empfängerspulen zugeordnet sind. Beispielsweise können ein oder zwei oder auch mehr Empfängerspulensysteme vorgesehen sein, denen jeweils zwei oder mehr Empfängerspulen zugeordnet sind.

Das Sensorsystem kann beispielsweise eingerichtet sein, zum Beispiel über mindestens eine entsprechende Ansteuerung, um die mindestens eine Erregerspule mit mindestens einer Wechselspannung und/oder mindestens einem Wechselstrom zu beaufschlagen. Beispielsweise kann die Wechselspannung und/oder der Wechselstrom eine Frequenz im Bereich einiger MHz aufweisen, beispielsweise eine Frequenz im Bereich von 1 MHz bis 50 MHz, zum Beispiel 2 MHz bis 20 MHz, insbesondere 3 MHz bis 10 MHz, beispielsweise 5 MHz. Dadurch kann ein elektromagnetisches Wechselfeld entstehen, welches in die Empfängerspulen koppelt und dort beispielsweise entsprechende Wechselspannungen und/oder Wechselströme induziert.

Unter einem "Geberrad" kann im Rahmen der vorliegenden Erfindung grundsätzlich ein beliebiges mit dem rotierenden Element verbindbares Bauelement verstanden werden, das eingerichtet ist, bei Verbindung mit dem rotierenden Element pro Umdrehung des rotierenden Elements mindestens ein messbares Signal, insbesondere eine Magnetfeldänderung, zu bewirken. Unter einem "Geberradprofil" kann im Rahmen der vorliegenden Erfindung grundsätzlich eine Gesamtheit von Profilelementen und von Zwischenräumen, die zwischen den Profilelementen angeordnet sind, verstanden werden. Unter einem "Profilelement" des Geberrads kann im Rahmen der vorliegenden Erfindung grundsätzlich eine beliebige Ausformung der Kontur des Geberrads verstanden werden, insbesondere eine Ausbuchtung, beispielsweise eine stiftförmige, eine zahnförmige oder eine zackenförmige Ausbuchtung, oder eine Einkerbung oder eine Aussparung, beispielsweise ein Loch.

Das Geberrad kann beispielsweise ausgestaltet sein, um je nach seiner Stellung Bereiche der Empfangsspulenstruktur "abzuschatten". Dadurch kann eine Kopplung zwischen der Sendespulenstruktur und den Empfangsspulen drehwinkelabhängig beeinflusst werden. Ein typischer Wertebereich eines Kopplungsfaktors kann beispielsweise -0,3 bis +0,3 betragen. Unter einem Koppelfaktor kann dabei insbesondere ein Amplitudenverhältnis zwischen einem Empfangssignal und einem Sende- oder Erregersignal verstanden werden. Der Koppelfaktor kann insbesondere sinusförmig mit dem Drehwinkel verlaufen.

Das Sensorsystem, beispielsweise einer Auswerteschaltung, kann insbesondere eingerichtet sein, um durch Demodulation eines in den Empfangsspulen induzierten Signals mit einem Trägersignal, also einem Signal der Sendespule, auf einen Betrag und eine Phase der Kopplung zu schließen. Der Betrag kann insbesondere kontinuierlich mit dem Drehwinkel variieren. Eine Phasenlage kann beispielsweise 0° oder 180° betragen. Beispielsweise kann durch eine Multiplikation des Betrags mit dem Kosinus ein vorzugsweise offsetfreies Sin/Cos-System entstehen, insbesondere bei Verwendung von zwei Empfangsspulen mit 90° Phasenversatz bezogen auf den Messbereich. Bei Verwendung von drei Empfangsspulen mit typischerweise 120° Phasenversatz bezogen auf den Messbereich kann insbesondere ein dreiphasiges Sinussignal entstehen, welches beispielsweise durch Anwendung der Clarke-Transformation in ein Sin/Cos-System überführt werden kann. Mit Hilfe der ArcTan-Funktion kann dann auf den Drehwinkel geschlossen werden.

Unter einem "induktiven Positionssensor" kann im Rahmen der vorliegenden Erfindung grundsätzlich ein beliebiger Sensor verstanden werden, der ein Signal entsprechend einer erfassten Eigenschaft erzeugen kann, insbesondere ein Messsignal, insbesondere ein elektrisches Messsignal, beispielsweise eine Spannung oder einen Strom, wobei eine Erzeugung des Messsignals auf einer Änderung eines magnetischen Flusses beruht. Insbesondere kann die erfasste Eigenschaft eine Position, beispielsweise eine Winkelposition umfassen. Insbesondere kann es sich bei dem induktiven Positionssensor um einen induktiven Magnetsensor handeln. Auch andere Ausgestaltungen sind jedoch grundsätzlich möglich.

Unter einer "Spulenanordnung" kann im Rahmen der vorliegenden Erfindung grundsätzliche eine beliebige Vorrichtung verstanden werden, die mindestens eine Spule umfasst. Unter einer "Spule" wird im Rahmen der vorliegenden Erfindung grundsätzlich ein beliebiges Bauelement verstanden, welches eine Induktivität aufweist und geeignet ist, bei Stromfluss ein Magnetfeld zu erzeugen und/oder umgekehrt. Beispielsweise kann eine Spule mindestens eine vollständige oder teilweise geschlossene Leiterschleife oder Windung umfassen. Unter einer "Erregerspule" kann im Rahmen der vorliegenden Erfindung grundsätzlich eine Spule verstanden werden, welche bei Anlegen einer elektrischen Spannung und/oder eines elektrischen Stroms einen magnetischen Fluss erzeugt. Die Erregerspule kann mindestens eine Erregerwindung aufweisen. Unter einer "Empfängerspule" wird im Rahmen der vorliegenden Erfindung grundsätzlich eine Spule verstanden, welche eingerichtet ist, aufgrund einer induktiven Kopplung zwischen Erregerspule und Empfängerspule ein Signal zu erzeugen, welches abhängig ist von der induktiven Kopplung. Unter einem "Empfängerspulensystem" kann im Rahmen der vorliegenden Erfindung grundsätzlich eine beliebige Vorrichtung verstanden werden, welche mindestens zwei, bevorzugt mindestens drei, Empfängerspulen umfasst.

Die Empfängerspulen sind zumindest abschnittsweise sinusförmig geformt. Unter "sinusförmig" wird im Rahmen der vorliegenden Erfindung grundsätzlich eine beliebige Form verstanden, welche einen Verlauf einer Sinuskurve aufweist. Beispielsweise kann ein Verlauf einer vollständigen Sinuskurve umfasst sein oder lediglich ein Teil einer Sinuskurve. Unter "zumindest abschnittsweise sinusförmig" kann dabei insbesondere verstanden werden, dass die Empfängerspule zumindest einen Abschnitt aufweist, welcher sinusförmig geformt ist. Zusätzlich können noch ein oder mehrere Abschnitte enthalten sein, welche keinen sinusförmigen Verlauf aufweisen, beispielsweise gerade Abschnitte. Die Empfängerspulen können beispielsweise mindestens eine vollständige Sinuskurve umfassen. Unter einer "vollständigen Sinuskurve" kann dabei insbesondere ein Verlauf einer Sinuskurve verstanden werden, welcher mindestens eine Periode umfasst. Hierbei kann die Sinuskurve im Nullpunkt oder einem beliebigen anderen Punkt der Sinuskurve beginnen. Allgemein sind bei einem sinusförmigen Verlauf auch leichte Abweichungen von der Sinusform möglich. Beispielsweise können Abweichungen toleriert werden, welche in jedem Punkt nicht mehr als 20 %, insbesondere nicht mehr als 10 % oder sogar nicht mehr als 5 % von dem absoluten Wert der Sinusform betragen. So kann die Sinusform beispielsweise auch abschnittsweise aus anderen Funktionen zusammengesetzt werden, so dass sich insgesamt eine näherungsweise Sinusform ergibt. Beispielsweise können Abschnitte der Sinusform aus kreisförmigen Leiterbahnenabschnitten zusammengesetzt werden. So kann die Sinusform beispielsweise aus Kreisbogenabschnitten zusammengesetzt werden, beispielsweise aus aneinander gesetzten und entgegengesetzt geöffneten Halbkreisen.

Mindestens eine der Empfängerspulen kann insbesondere mindestens zwei Teilwindungen umfassen. Eine Teilwindung kann dabei eine Form aufweisen, welche mindestens eine vollständige Sinuskurve, insbesondere auch genau eine Sinuskurve, umfasst. Die aufeinanderfolgenden Teilwindungen einer Empfängerspule können direkt aufeinander folgen. Insbesondere können aufeinanderfolgende Teilwindungen auch verbunden sein, beispielsweise durch einen geraden oder ungekrümmten Abschnitt. Insbesondere können aufeinanderfolgende Teilwindungen dieselbe Periode aufweisen. Insbesondere können aufeinanderfolgende Teilwindungen auch beispielsweise dieselbe Amplitude aufweisen. Insbesondere können aufeinanderfolgende Teilwindungen einer Empfängerspule gegenläufig orientiert sein. Insbesondere können aufeinanderfolgende Teilwindungen einer Empfängerspule derart gegenläufig orientiert sein, dass die Teilwindungen sich an mindestens einem Punkt kreuzen. Insbesondere können die sich kreuzenden Teilwindungen übereinander verlaufen, so dass sich die beiden kreuzenden Teilwindungen im Kreuzungspunkt nicht berühren.

Neben den Empfängerspulen können auch Signale sinusförmig sein. Insbesondere können die Empfängerspulen derart angeordnet sein, dass diese bei einer Rotation des rotierenden Elements mit konstanter Winkelgeschwindigkeit um die Rotationsachse sinusförmige Signale generieren. Bezüglich der Definition von "sinusförmig" kann auch hinsichtlich der Signale auf die obige Definition verwiesen werden, wobei in diesem Fall beispielsweise eine räumliche Dimension durch eine zeitliche Dimension ausgetauscht wird.

Das Sensorsystem kann eine Anzahl von n Empfängerspulen umfassen, wobei n eine positive ganze Zahl ist. Die generierten sinusförmigen Signale der n Empfängerspulen können gegeneinander phasenversetzt sein. Beispielsweise können benachbarte sinusförmige Signale einen Phasenabstand von $2\pi/(2n)$ und/oder $360°/(2n)$ für n=2 aufweisen. Weiterhin können beispielsweise benachbarte sinusförmige Signale einen Phasenabstand von $2\pi/(n)$ und/oder

360°/(n) für n≥3 aufweisen. Insbesondere können benachbarte sinusförmige Signale von genau zwei Empfängerspulen einen Phasenabstand von 90° aufweisen. Insbesondere können benachbarte sinusförmige Signale von genau drei Empfängerspulen einen Phasenabstand von 120° aufweisen.

Die mindestens eine Spulenanordnung kann auf mindestens einem Schaltungsträger angeordnet sein. Insbesondere kann auch eine Vielzahl von Spulenanordnungen auf einem gemeinsamen Schaltungsträger angeordnet sein. Der Schaltungsträger kann im Wesentlichen koaxial zu der Rotationsachse angeordnet sein. Der Schaltungsträger kann das Geberrad oder ein Kreissegment des Geberrads im Wesentlichen kreisförmig oder kreissegmentförmig umgeben. Unter dem Begriff "im Wesentlichen kreisförmig" wird im Rahmen der vorliegenden Erfindung grundsätzlich verstanden, dass das beschriebene Bauelement einen Krümmungsradius aufweist. Der Krümmungsradius kann innerhalb des Bauelements um einen Wert von 0 % bis 80 %, bevorzugt von 0 % bis 50 %, mehr bevorzugt von 0 % bis 20 % und besonders bevorzugt von 0 % bis 5 % variieren. Insbesondere kann der Krümmungsradius auch konstant sein. Alternativ oder zusätzlich kann der Schaltungsträger auch aus zwei oder mehr Segmenten zusammengesetzt sein, welche beispielsweise jeweils eben oder auch gekrümmt ausgestaltet sein können und welche beispielsweise miteinander verbunden sein können. Die Segmente können insgesamt dann ebenfalls koaxial zur Rotationsachse angeordnet sein, auch wenn die einzelnen Segmente dann beispielsweise tangential angeordnet sind.

Die Spulenanordnung, insbesondere die auf dem Schaltungsträger angeordnete Spulenanordnung, kann das Geberrad oder mindestens ein Kreissegment des Geberrads im Wesentlichen kreissegmentförmig oder kreisförmig umgeben. Insbesondere kann die Spulenanordnung, insbesondere die auf dem Schaltungsträger angeordnete Spulenanordnung, in mindestens einer Winkelposition des Geberrads mindestens ein Profilelement und mindestens einen Zwischenraum zwischen zwei Profilelementen des Geberrads abdecken.

Der Schaltungsträger kann flexibel ausgestaltet sein. Insbesondere kann der Schaltungsträger ein flexibles Material umfassen. Der Schaltungsträger kann insbesondere ausgewählt sein aus der Gruppe bestehend aus: einer Leiterplatte, insbesondere einer Starrflex-Leiterplatte, beispielsweise einer gebogenen Starrflex-Leiterplatte; einer starren Leiterplatte, insbesondere einer starren Leiterplatte mit Einkerbungen; einer Leiterkarte; einer Platine und einer gedruckten Schaltung, insbesondere einem "printed circuit board" (PCB). Insbesondere kann der Schaltungsträger mindestens zwei ebene Flächen aufweisen. Die ebenen Flächen können in einem Winkel zueinander angeordnet sein. Insbesondere kann der Schaltungsträger mindestens ein Verbindungselement aufweisen, wobei das Verbindungselement die ebenen Flächen miteinander verbindet. Insbesondere können die ebenen Flächen einen Winkel einschließen, wobei der Winkel einen Wert von 10° bis 180°, bevorzugt von 30° bis 150° und besonders bevorzugt von 60° bis 120° aufweisen kann. Weiterhin kann der Schaltungsträger in einem Gehäuse, insbesondere in einem Spritzgussgehäuse, angeordnet sein.

Das Sensorsystem kann eingerichtet sein, eine induktive Kopplung und/oder eine Änderung einer induktiven Kopplung zwischen der Erregerspule und der mindestens einen Empfängerspule zu erfassen. Insbesondere kann das Sensorsystem eingerichtet sein, die durch eine Bewegung und/oder eine Position des Geberrades bewirkte induktive Kopplung und/oder die durch eine Bewegung und/oder eine Position des Geberrades bewirkte Änderung der induktiven Kopplung zwischen der Erregerspule und den Empfängerspulen zu erfassen. Hierfür kann das Sensorsystem beispielsweise eine entsprechende Auswerteeinheit aufweisen. Insbesondere kann die Auswerteeinheit mindestens eine Auswerteschaltung aufweisen. Insbesondere kann die Auswerteschaltung eingerichtet sein, die Signale des Positionssensors auszuwerten. Bei der Auswerteschaltung kann es sich beispielsweise um einen Prozessor handeln. Die Auswerteeinheit kann mit der mindestens einen Spulenanordnung auf einem gemeinsamen Schaltungsträger angeordnet sein. Die Auswerteeinheit kann auch von der mindestens einen Spulenanordnung getrennt angeordnet sein.

Das Sensorsystem kann insbesondere eingerichtet sein, um aus der durch die Bewegung und/oder durch eine Position des Geberrads bewirkten Änderung der induktiven Kopplung zwischen der Erregerspule und den Empfängerspulen eine absolute oder relative Winkelposition des rotierenden Elements zu bestimmen. Unter einer "relativen Winkelposition" kann dabei grundsätzlich eine Position bezüglich einer durch die Empfängerspulen definierten Periode verstanden werden.

Insbesondere kann das Sensorsystem eingerichtet sein, eine Erfassung der absoluten oder relativen Winkelposition des rotierenden Elements bei einem Einschalten einer Spannungsversorgung zu ermöglichen. Das Sensorsystem kann insbesondere eine Erfassung der Winkelposition des momentan stillstehenden rotierenden Elements ermöglichen. Diese Eigenschaft der Erfassung bei Einschalten der Spannungsversorgung kann insbesondere auch als "True-Power-On"-Funktion bezeichnet werden. Das Sensorsystem kann somit insbesondere eine "True-Power-On"-Funktion besitzen.

Das Sensorsystem kann mindestens zwei, bevorzugt mindestens drei, Empfängerspulen umfassen. Weiterhin kann jede der mindestens zwei Empfängerspulen in mindestens einer Winkelposition des Geberrads mindestens ein Profilelement und mindestens einen Zwischenraum zwischen zwei Elementen des Geberrads abdecken.

Die mindestens zwei sinusförmig geformten Empfängerspulen des Sensorsystems können zueinander phasenversetzt angeordnet sein. Insbesondere können die mindestens zwei sinusförmigen Empfängerspulen identische Perioden aufweisen.

Insbesondere können die Periodizitäten der sinusförmigen Empfängerspulen einem ganzzahligen Vielfachen eines Winkelabstands β zwischen zwei benachbarten Profilelementen des Geberrads entsprechen. Unter einem "ganzzahligen Vielfachen" kann dabei allgemein eine Multiplikation mit einer positiven ganzen Zahl m verstanden werden, welche beispielsweise auch Eins sein kann.

Insbesondere können auch genau zwei Empfängerspulen einen Phasenversatz zueinander aufweisen. Insbesondere kann der Phasenversatz von genau zwei Empfängerspulen einem ganzzahligen Vielfachen m des Winkelabstands β/4 entsprechen. Insbesondere kann der Phasenversatz einer ersten Empfängerspule zu einer zweiten Empfängerspule genau einem Winkelabstand von β/4 entsprechen.

Insbesondere können auch genau drei Empfängerspulen einen Phasenversatz zueinander aufweisen. Insbesondere kann der Phasenversatz von genau drei Empfängerspulen einem ganzzahligen Vielfachen m des Winkelabstands β/3 entsprechen, beispielsweise dem oben genannten ganzzahligen Vielfachen m. Insbesondere kann der Phasenversatz einer ersten Empfängerspule zu einer zweiten Empfängerspule sowie der Phasenversatz einer zweiten Empfängerspule zu einer dritten Empfängerspule jeweils genau einem Winkelabstand von β/3 entsprechen.

Das Sensorsystem kann eine Anzahl von n Empfängerspulen aufweisen. Insbesondere können benachbarte Empfängerspulen einen Phasenversatz aufweisen. Insbesondere kann der Phasenversatz von n Empfängerspulen eines Sensorsystems einem ganzzahligen Vielfachen m des Winkelabstands β/(2n) für n=2 und/oder β/(n) für n≥3, entsprechen, beispielsweise dem oben genannten ganzzahligen Vielfachen m.

Das Sensorsystem kann eine Auswerteschaltung umfassen. Die Auswerteschaltung kann insbesondere derart eingerichtet sein, dass aus den Signalen der Empfängerspulen auf eine Winkelposition Φ des Geberrads geschlossen werden kann. Insbesondere kann die Auswerteschaltung derart eingerichtet sein, um mindestens einen Quotienten mindestens zweier Signale mindestens zweier Empfängerspulen zu generieren. Beispielsweise kann für die Berechnung der Winkelposition Φ aus zwei von zwei Empfängerspulen generierten Signalen die Gesetzmäßigkeit tanΦ = sinΦ / cosΦ verwendet werden. Beispielsweise kann für die Berechnung der Winkelposition Φ aus drei von drei Empfängerspulen generierten Signalen die Clarke-Transformation verwendet werden.

Die Spulenanordnung des Sensorsystems kann eine Vielzahl Empfängerspulensysteme aufweisen. Insbesondere kann die Spulenanordnung mindestens zwei Empfängerspulensysteme umfassen. Beispielsweise kann den mindestens zwei Empfängerspulensystemen eine gemeinsame Erregerspule zugeordnet sein. Alternativ oder zusätzlich kann auch genau einem Empfängerspulensystem genau eine Erregerspule zugeordnet sein.

Insbesondere kann die Erregerspule die ihr zugeordneten Empfängerspulensysteme umschließen. Beispielsweise kann eine Erregerspule genau ein ihr zugeordnetes Empfängerspulensystem umschließen. Beispielsweise kann eine Erregerspule auch mindestens zwei ihr zugeordnete Empfängerspulensysteme gemeinsam umschließen.

Die Empfängerspulensysteme können in Umfangsrichtung parallel zueinander und axial bezüglich der Rotationsachse zueinander versetzt angeordnet sein. Die Empfängerspulen innerhalb eines Empfängerspulensystems können jeweils gleiche Periodizität aufweisen. Insbesondere können sich die Periodizitäten von Empfängerspulen unterschiedlicher Empfängerspulensysteme jedoch unterscheiden. Jedem der Empfängerspulensysteme kann ein separates Geberrad zugeordnet sein. Insbesondere kann einem ersten Empfängerspulensystem ein erstes Geberrad zugeordnet sein. Das erste Geberrad kann beispielsweise zwischen zwei benachbarten Profilelementen des ersten Geberrads einen Winkelabstand β₁ aufweisen. Das dem ersten Geberrad zugeordnete erste Empfängerspulensystem kann dabei eine Periodizität aufweisen. Insbesondere kann die Periodizität des ersten Empfängerspulensystems einem ganzzahligen Vielfachen von β₁ entsprechen. Insbesondere kann einem zweiten Empfängerspulensystem ein zweites Geberrad zugeordnet sein. Das zweite Geberrad kann beispielsweise zwischen zwei benachbarten Profilelementen des zweiten Geberrads einen Winkelabstand β₂ aufweisen. Das dem zweiten Geberrad zugeordnete zweite Empfängerspulensystem kann dabei eine Periodizität aufweisen. Insbesondere kann die Periodizität des zweiten Empfängerspulensystems einem ganzzahligen Vielfachen von β₂ entsprechen. Der Winkelabstand β₂ zwischen zwei benachbarten Profilelementen des zweiten Geberrads kann sich von dem Winkelabstand β₁ zwischen zwei benachbarten Profilelementen des ersten Geberrads unterscheiden.

Das Sensorsystem kann eingerichtet sein, die Signale der Empfängerspulensysteme, die jeweils einem separaten Geberrad zugeordnet sein können, nach dem Noniusprinzip miteinander zu verrechnen. Die Verrechnung der Signale der Empfängerspulensysteme nach dem Noniusprinzip kann dabei einen Rückschluss auf eine absolute Winkelposition des rotierenden Elements ermöglichen. Beispielsweise kann ein aus den Signalen des ersten Empfängerspurensystems berechneter erster Einzelwinkel eine Größe $2\pi/k$, mit einer natürlichen Zahl k, aufweisen. Beispielsweise kann ein aus den Signalen des zweiten Empfängerspurensystems berechneter zweiter Einzelwinkel eine Größe $2\pi/j$, mit einer natürlichen Zahl j≠k, aufweisen. Beispielsweise kann aus dem ersten Einzelwinkel und dem zweiten Einzelwinkel auf eine absolute Winkelposition im Bereich von bis zu $2\pi$ geschlossen werden. Insbesondere kann es möglich sein, dass aus zwei Einzelwinkeln, die jeweils maximal 360°/k (mit einer natürlichen Zahl k) und 360°/j (mit einer natürlichen Zahl j, wobei j≠k) groß sind, auf einen Winkel im Bereich bis zu 360° geschlossen werden kann.

In einem weiteren Aspekt der vorliegenden Erfindung wird ein Verfahren zur Bestimmung mindestens einer Rotationseigenschaft eines um mindestens eine Rotationsachse rotierenden Elements vorgeschlagen. Das Verfahren umfasst die Verwendung mindestens eines Sensorsystems. Das Verfahren umfasst die folgenden Schritte, bevorzugt in der angegebenen Reihenfolge. Das Verfahren kann, zusätzlich zu den genannten Verfahrensschritten, auch weitere Verfahrensschritte umfassen.

Die Verfahrensschritte sind:

- eine Aufnahme mindestens zweier induktiver Signale mittels mindestens zweier Empfängerspulen; und
- eine Auswertung der induktiven Signale und Ermittlung der Rotationseigenschaft mittels der induktiven Signale.

Das Verfahren erfolgt unter Verwendung eines Sensorsystems gemäß der vorliegenden Erfindung, also gemäß einer der oben genannten Ausführungsformen oder gemäß einer der unten noch näher beschriebenen Ausführungsformen. Dementsprechend kann für Definitionen und optionale Ausgestaltungen weitgehend auf die Beschreibung des Sensorelements verwiesen werden. Auch andere Ausgestaltungen sind jedoch grundsätzlich möglich.

Insbesondere können die induktiven Signale des induktiven Positionssensors mindestens ein Signal umfassen ausgewählt aus der Gruppe bestehend aus der induktiven Kopplung in der Spulenanordnung und der Änderung der induktiven Kopplung in der ersten Spulenanordnung. Insbesondere können die induktiven Signale Spannungssignale sein, insbesondere in den Empfängerspulen erzeugte Spannungen. Insbesondere können die Spannungen in den Empfängerspulen aufgrund der induktiven Kopplung der Empfängerspulen mit der mindestens einen Erregerspule erzeugt werden. Insbesondere können die induktive Kopplung und/oder die Änderung der induktiven Kopplung in der Spulenanordnung von einer Bewegung und/oder von einer Position des Geberrads abhängen. Weiterhin kann das Verfahren eine Bestimmung der Winkelposition des rotierenden Elements mithilfe der erfassten, von der Position und/oder der Bewegung des Geberrads abhängigen induktiven Kopplung und/oder Änderung der induktiven Kopplung in der ersten Spulenanordnung umfassen.

Ferner kann das Verfahren das Aufbereiten der induktiven Signale durch eine Auswerteschaltung umfassen. Weiterhin kann das Verfahren das Weiterleiten der induktiven Signale an ein Steuergerät, beispielsweise einen Prozessor, umfassen. Weiterhin kann das Verfahren eine Ermittlung der Rotationseigenschaft, beispielsweise der Winkelposition, mittels einer Auswertung der induktiven Signale umfassen.

Vorteile der Erfindung

Die vorgeschlagene Vorrichtung und das vorgeschlagene Verfahren weisen gegenüber bekannten Vorrichtungen und Verfahren zahlreiche Vorteile auf. Insbesondere ist es möglich, dass die erfindungsgemäß mittels der Empfängerspulen generierten sinusförmigen Signale die Komplexität der Ermittlung mindestens einer Rotationseigenschaft, insbesondere die Winkelposition $\Phi$, im Vergleich zum Stand der Technik verringern. Insbesondere kann es möglich sein, dass die Berechnung, insbesondere die Rücktransformation, durch Verwendung einer Rechenvorschrift, beispielsweise der Clarke-Transformation und/oder beispielsweise der Gesetzmäßigkeit $\tan\Phi = \sin\Phi / \cos\Phi$, im Vergleich zum Stand der Technik vereinfacht wird.

Die erfindungsgemäße Generierung der sinusförmigen Signale mittels der sinusförmig geformten Empfängerspulen kann insbesondere die Komplexität des Messprinzips im Vergleich zum Stand der Technik verringern. Insbesondere ist es möglich, dass das erfindungsgemäße Sensorsystem ein einfaches Messprinzip beinhaltet.

Weiterhin kann das Sensorsystem im Vergleich zum Stand der Technik eine sehr hohe Sensitivität aufweisen. Mit Hilfe des erfindungsgemäßen Sensorsystems kann die Zuverlässigkeit der ermittelten Werte der mindestens einen Rotationseigenschaft, insbesondere der Winkelposition $\Phi$, im Vergleich zum Stand der Technik erhöht werden. Weiterhin können die mittels des erfindungsgemäßen Sensorsystems ermittelten Werte der mindestens einen Rotationseigenschaft, insbesondere der Winkelposition $\Phi$, keinem oder sehr geringem Einfluss durch magnetische Störfelder unterliegen. Insbesondere kann ein Einfluss von Magnetfeldern infolge hoher Ströme durch in Sensornähe angeordnete elektrisch leitfähige Materialien, insbesondere Kabel, auf das erfindungsgemäße Sensorsystem verringert werden.

Das erfindungsgemäße Sensorsystem kann insbesondere im Vergleich zum Stand der Technik einen deutlichen Vorteil im Ein- und Ausbau liefern, insbesondere bei Nutzung des erfindungsgemäßen Sensorsystems zur Nockenwellenpositionserfassung. So ist es insbesondere möglich, dass Abweichungen der Ausformung, insbesondere herstellungsbedingte Abweichungen der geometrischen Form, insbesondere mechanische Toleranzen, von den das Sensorsystem umgebenden Bauteilen keinen Einfluss auf die Funktionalität des Sensorsystems haben. Insbesondere können im Vergleich zu den im Stand der Technik üblichen zulässigen Toleranzen, insbesondere beim Einbau des Sensorsystems, größere mechanische Toleranzen zugelassen werden. Insbesondere könnte das erfindungsgemäße Sensorsystem im Vergleich zum Stand der Technik toleranzrobust sein.

Weiterhin kann das vorgeschlagene Sensorsystem im Vergleich zum Stand der Technik einen deutlich geringeren benötigten Bauraum aufweisen. Zudem verursacht die sinusförmige Formgebung der Empfängerspulen in der Regel keine zusätzlichen Kosten. Das erfindungsgemäße Sensorsystem kann also insbesondere kostengünstig ausgestaltet werden.

Weiterhin kann ein Messbereich des erfindungsgemäßen Sensorsystems durch eine Auswertung mit zwei oder mehreren Geberrädern und/oder unterschiedlichen Geberradprofilen, insbesondere unterschiedlicher Zahnanzahl, zu einer Erfassung einer Winkelposition, insbesondere zu einer absoluten Winkelerfassung, eines Geberrads und/oder eines rotierenden Elements, insbesondere einer Wellenposition, auf 360° erweitert werden. Beispielsweise kann eine präzise Messung mithilfe des Noniusprinzips oder Vernier-Verfahrens erfolgen. Insbesondere kann die Spulenanordnung, insbesondere die auf dem Schaltungsträger angeordnete Spulenanordnung, in mindestens einer Winkelposition des Geberrads mindestens ein Profilelement und mindestens einen Zwischenraum zwischen zwei Profilelementen des Geberrads abdecken. Insbesondere kann ein Öffnungswinkel $\alpha$ der Spulenanordnung mindestens einem Öffnungswinkel $\beta$ des von der Spulenanordnung abgedeckten Kreissegments des Geberrads, umfassend mindestens ein Profilelement und mindestens einen Zwischenraum zwischen zwei Profilelementen, entsprechen.

Weiterhin kann das vorgeschlagene Sensorsystem eine Verfügbarkeit der Winkelposition des rotierenden Elements bei einem Einschalten einer Spannungsversorgung ermöglichen. Insbesondere kann das erfindungsgemäße Sensorsystem über eine True-Power-On-Funktion verfügen. Eine True-Power-On-Funktion wird von vielen Orginalausrüstungsherstellern (OEM) zunehmend gefordert.

Weiterhin kann die vorgeschlagene Vorrichtung die Anwendung einer Vielzahl von Verfahren zur Bestimmung von mindestens einer Rotationseigenschaft, wie beispielsweise der Drehzahl oder der Winkelgeschwindigkeit, zulassen. Es kann sich als vorteilhaft erweisen, eine Vielzahl solcher Verfahren einzusetzen, beispielsweise um einen mit einem Verfahren erhaltenen Wert zu überprüfen.

Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:

Figur 1                 eine schematische Darstellung eines nicht zur Erfindung gehörenden Beispiels einesSensorsystems in Draufsicht; und

Figuren 2, 3 und 4      schematische Darstellungen eines induktiven Positionssensors zur Verwendung in dem Sensorsystem, wobei nur Figur 4 ein Ausführungsbeispiel zeigt.

Ausführungsformen der Erfindung

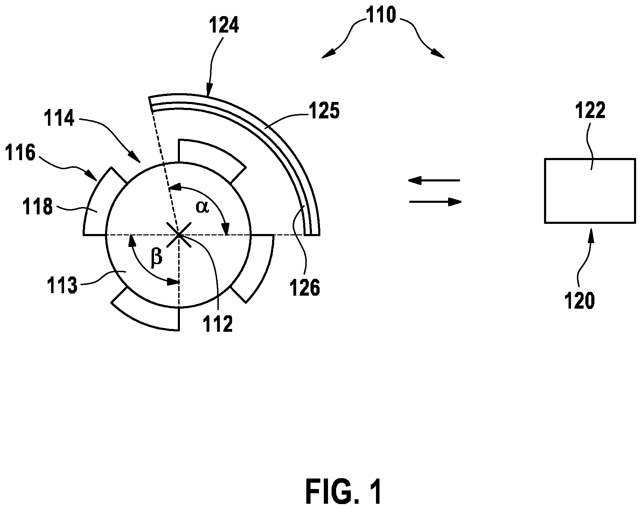

In Figur 1 ist ein Beispiel eines Sensorsystems 110 zur Bestimmung mindestens einer Rotationseigenschaft eines um mindestens eine Rotationsachse 112 rotierenden Elements 113 gezeigt. Das Sensorsystem 110 kann insbesondere zum Einsatz im Kraftfahrzeug eingerichtet sein. Insbesondere kann das Sensorsystem 110 zur Erfassung mindestens einer Rotationseigenschaft einer Nockenwelle eingerichtet sein. Beispielsweise kann das Sensorsystem 110 eingerichtet sein, eine Winkelposition der Nockenwelle zu erfassen. Dementsprechend kann es sich bei dem rotierenden Element 113 beispielsweise um einen Nockenwelle handeln.

Das Sensorsystem 110 kann, neben den in Figur 1 dargestellten Elementen, weiterhin ein oder mehrere zusätzliche Elemente umfassen, beispielsweise ein oder mehrere in den Figuren nicht dargestellte weitere Funktionselemente, wie beispielsweise Elektroden, Elektrodenzuleitungen und Kontakte, mehrere Schichten, Heizelemente oder andere Elemente, wie beispielsweise in dem oben genannten Stand der Technik gezeigt.

Das Sensorsystem 110 weist mindestens ein mit einem rotierenden Element 113 verbindbares Geberrad 114 auf. Das Geberrad 114 weist ein Geberradprofil 116, umfassend mindestens ein Profilelement 118, auf. Das mindestens eine Profilelement 118 kann insbesondere ausgewählt sein aus der Gruppe bestehend aus: einer Ausbuchtung, insbesondere einer stiftförmigen, einer zahnförmigen oder einer zackenförmigen Ausbuchtung, beispielsweise einem Zahn, wie in Figur 1 dargestellt; einer Einkerbung; einer Aussparung, beispielsweise einem Loch; einer in der Breite des Geberrads 114 profilierten Spur. Insbesondere kann das Geberrad 114 eine Mehrzahl von Profilelementen 118 aufweisen, wie in Figur 1 zu sehen ist. Insbesondere kann die Mehrzahl von Profilelementen 118 über den Umfang des Geberrads 114 verteilt angeordnet sein. Beispielsweise können die Profilelemente 118 äquidistant und/oder periodisch angeordnet sein. Auch andere Ausgestaltungen des Geberradprofils 116 sind möglich. Das Geberrad 114 kann insbesondere mindestens ein Material aufweisen ausgewählt aus der Gruppe bestehend aus: einem elektrisch leitfähigen Material; einem ferromagnetischen Material; einem Metall. Insbesondere kann das Profilelement 118 mindestens ein Material aufweisen ausgewählt aus der Gruppe bestehend aus: einem elektrisch leitfähigen Material; einem ferromagnetischen Material; einem Metall. Insbesondere kann das Sensorsystem 110 mindestens zwei Geberräder 114 aufweisen. Insbesondere können die Geberräder 114 unterschiedliche Geberradprofile 116 aufweisen.

Das rotierende Element 113 rotiert um die mindestens eine Rotationsachse 112. Das mindestens eine Geberrad 114 ist mit dem rotierenden Element verbindbar, insbesondere, wie in Figur 1 gezeigt, verbunden. Auch das Geberrad 114 kann eine Rotationsachse aufweisen, wobei, wie in Figur 1 dargestellt, das rotierende Element 113 und das Geberrad 114 insbesondere gemeinsam um die Rotationsachse 112 rotieren können.

Das Sensorsystem 110 kann zudem eine Auswerteeinheit 120, umfassend mindestens eine Auswerteschaltung 122, aufweisen. Wie in Figur 1 dargestellt, kann die Auswerteeinheit 120 in einem separaten Gehäuse, insbesondere einem Spritzgussgehäuse, angeordnet sein. Auch eine andere Ausgestaltung ist jedoch grundsätzlich möglich, beispielsweise eine Ausgestaltung, bei welcher die Auswerteeinheit 120 mit anderen Komponenten des Sensorsystems 110 zusammengefasst ist, beispielsweise mindestens einem unten noch näher erläuterten induktiven Positionssensor.

Das Sensorsystem 110 weist weiterhin mindestens einen induktiven Positionssensor 124 auf. Der induktive Positionssensor 124 umfasst mindestens einen Schaltungsträger 125 und mindestens eine Spulenanordnung 126, welche mit dem Schaltungsträger 125 verbunden ist, beispielsweise auf diesen aufgebracht ist, insbesondere auf einer dem rotierenden Element 113 zuweisenden Seite des Schaltungsträgers 125.

Die Auswerteeinheit 120 kann beispielsweise, wie oben ausgeführt, auch ganz oder teilweise in den Schaltungsträger 125 integriert sein und/oder ebenfalls auf den Schaltungsträger 125 aufgebracht sein. Beispielsweise kann die Auswerteeinheit 120 ganz oder teilweise mit der mindestens einen Spulenanordnung 126 auf einem gemeinsamen Schaltungsträger 125 angeordnet sein. Weiterhin kann die Auswerteeinheit 120 auch ganz oder teilweise von der mindestens einen Spulenanordnung 126 getrennt angeordnet sein, beispielsweise auf mindestens einem weiteren Schaltungsträger und/oder in einem Gehäuse.

Der Schaltungsträger 125 kann starr oder flexibel ausgestaltet sein.

Insbesondere kann der Schaltungsträger 125 biegsam und/oder gebogen ausgestaltet sein, beispielsweise kreisförmig oder kreissegmentförmig gebogen, wie in Figur 1 dargestellt. Insbesondere kann der Schaltungsträger 125 ein flexibles Material umfassen. Insbesondere kann der Schaltungsträger 125 ausgewählt sein aus der Gruppe bestehend aus: einer Leiterplatte, insbesondere einer flexiblen Leiterplatte, insbesondere einer Starrflex-Leiterplatte, beispielsweise einer gebogenen Starrflex-Leiterplatte; einer starren Leiterplatte, insbesondere einer starren Leiterplatte mit Einkerbungen; einer Leiterkarte; einer Platine und einer gedruckten Schaltung, insbesondere einem "printed circuit board" (PCB).

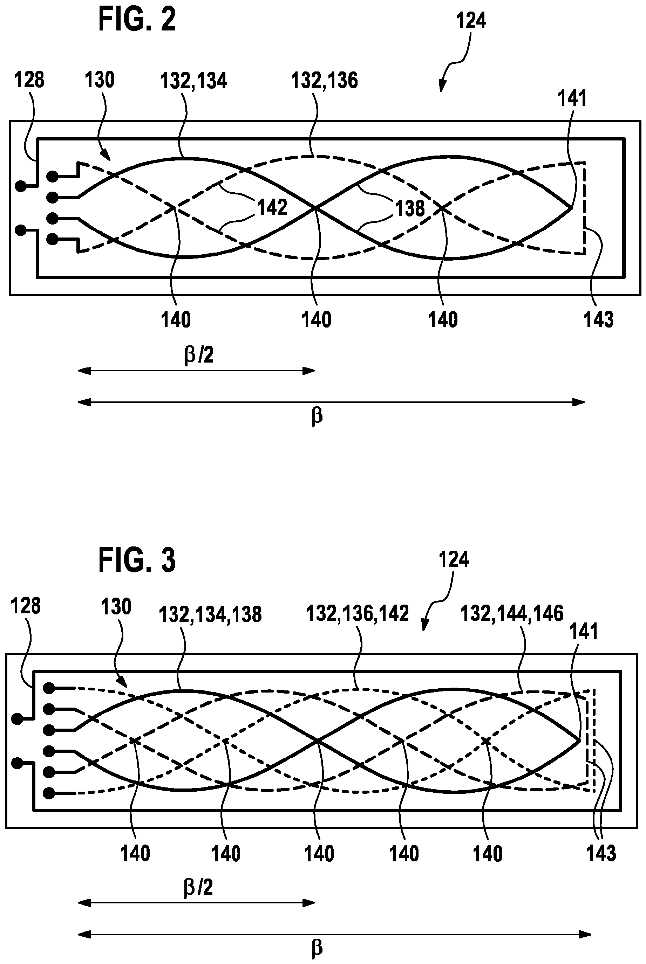

Die Spulenanordnung 126 umfasst mindestens eine Erregerspule 128 und mindestens ein Empfängerspulensystem 130, welche in Figur 1 nicht dargestellt sind und welche im Detail in den Figuren 2, 3 und 4 erkennbar sind. Das Empfängerspulensystem 130 umfasst mindestens zwei Empfängerspulen 132. In Figur 2 ist ein Beispiel mit genau zwei Empfängerspulen 132 gezeigt. Als alternative Ausgestaltungen sind in den

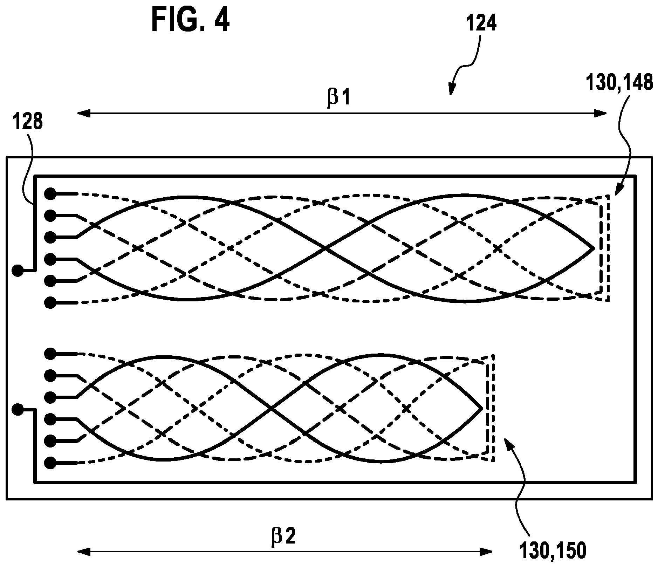

Figuren 3 und 4 Beispiele gezeigt, bei welchen das Empfängerspulensystem 130 drei Empfängerspulen 132 umfasst. Alternativ können auch mehr als drei Empfängerspulen 132 vorgesehen sein. Wie in sämtlichen Ausführungsbeispielen erkennbar ist, sind die Empfängerspulen 132 zumindest abschnittsweise sinusförmig geformt.

Die Spulenanordnung 126 kann insbesondere, wie in Figur 1 erkennbar, einen Öffnungswinkel $\alpha$ aufweisen, also einen Winkelbereich $\alpha$ um die Rotationsachse 112 abdecken oder sensorisch erfassen. Die Periodizitäten der sinusförmigen Empfängerspulensysteme 130 können dabei einem Winkelabstand $\beta$ zwischen zwei benachbarten Profilelementen 118 des Geberrads 114 entsprechen, wie in den in den Figuren 2 und 3 zu sehen ist.

Insbesondere kann der Öffnungswinkel $\alpha$ mindestens so groß sein wie der Winkelabstand $\beta$, also $\alpha \geq \beta$. Insbesondere können die Periodizitäten der sinusförmigen Empfängerspulensysteme 130 auch einem ganzzahligen Vielfachen des Winkelabstands $\beta$ zwischen zwei benachbarten Profilelementen 118 des Geberrads 114 entsprechen.

In Figur 2 ist ein Beispiel des induktiven Positionssensors 124 dargestellt, in dem das Empfängerspulensystem 130 genau zwei Empfängerspulen 132 umfasst, nämlich eine erste Empfängerspule 134 und eine zweite Empfängerspule 136. Die erste Empfängerspule 134 weist in dem in Figur 2 dargestellten Beispiel zwei direkt aufeinanderfolgende erste Teilwindungen 138 auf. Dabei weisen die beiden ersten Teilwindungen 138 dieselbe Periode sowie beispielsweise dieselbe Amplitude auf. Die beiden ersten Teilwindungen 138 der ersten Empfängerspule 134 können, wie in Figur 2 zu sehen, gegenläufig orientiert sein, also beispielsweise um eine halbe Periode gegeneinander verschoben sein. Insbesondere können die beiden ersten Teilwindungen 138 der ersten Empfängerspule 134 derart gegenläufig orientiert sein, dass sich die beiden ersten Teilwindungen 138 in mindestens einem Kreuzungspunkt 140 kreuzen. Am rechten Ende der Anordnung gemäß Figur 2 können die ersten Teilwindungen 138 beispielsweise in einem Knoten 141 verbunden sein, analog zu einer reflektierten Welle. In dem in Figur 2 dargestellten Beispiel weisen die beiden ersten Teilwindungen 138 der ersten Empfängerspule 134 exemplarisch genau einen Kreuzungspunkt 140 auf, welcher sich bei der Hälfte des Winkelabstands $\beta$, also bei $\beta/2$ befindet. Die zweite Empfängerspule 136 weist in dem in Figur 2 dargestellten

Beispiel zwei aufeinanderfolgende zweiten Teilwindungen 142 auf, welche, welche durch einen geraden Abschnitt 143 verbunden sind, analog zu einem Bauch einer reflektierten Welle. Dabei weisen die beiden zweiten

Teilwindungen 142 dieselbe Periode sowie beispielsweise dieselbe Amplitude auf. Die beiden zweiten Teilwindungen 142 der zweiten Empfängerspule 136 können, wie in Figur 2 zu sehen, gegenläufig orientiert sein, also wieder um eine halbe Periode gegeneinander verschoben sein. Insbesondere können die beiden zweiten Teilwindungen 142 der zweiten Empfängerspule 136 derart gegenläufig orientiert sein, dass sich die beiden zweiten Teilwindungen 142 in mindestens einem Kreuzungspunkt 140 kreuzen. In dem in Figur 2 dargestellten Beispiel weisen die beiden zweiten Teilwindungen 142 der zweiten Empfängerspule 136 genau zwei Kreuzungspunkte 140 auf. Die beiden Kreuzungspunkte 140 der beiden zweiten Teilwindungen 142 der zweiten Empfängerspule 136 befinden sich in dem dargestellten Beispiel in einem Abstand von β/4 zu dem Kreuzungspunkt 140 der beiden ersten Teilwindungen 138 der ersten Empfängerspule 134. Die Abstände des Kreuzungspunkts 140 der ersten Empfängerspule 134 zu den Kreuzungspunkten 140 der zweiten Empfängerspule 136 können sich aus dem Phasenversatz der ersten Empfängerspule 134 zu der zweiten Empfängerspule 136 ergeben.

In der Ausgestaltung gemäß Figur 2 können die Empfängerspulen 132 insbesondere derart geformt sein, dass sich sinusförmige Signale ergeben. Dies kann, wie in Figur 2 gezeigt, dadurch erreicht werden, dass diese aus sinusförmigen Teilwindungen 138, 142 zusammengesetzt sind. Dabei kann eine exakte Sinusform realisiert sein oder auch eine Abweichung von einer Sinusform, beispielsweise mittels kreisförmigen Abschnitten, beispielsweise aneinander gesetzten entgegengesetzt orientierten Halbkreisen oder Kreissegmenten. So kann beispielsweise mit der Anordnung gemäß Figur 2 ein Zweiphasensystem realisiert werden. Jede der Empfängerspulen 132 kann insbesondere jeweils eine identisch große rechts- und linkslaufende Spulenfläche umschließen. Der mit β/2 bezeichnete Bereich der ersten Empfängerspule 134 stellt beispielsweise definitionsgemäß eine rechtslaufende Teilwindung dar, während der restliche Teil der ersten Empfängerspule 134 linkslaufend ist. Am Kreuzungspunkt 140, welcher vorzugsweise genau in der Mitte des Messbereiches angeordnet ist, verlaufen die Leiterbahnen übereinander und berühren sich nicht.

Wird nun die dargestellte Struktur von einem Geberrad 114 gemäß Figur 1 überstrichen, liefert die erste Empfängerspule 134 ein sinusförmiges Signal, und die zweite Empfängerspule 136 ein cosinusförmiges Signal. Aufgrund der Gesetzmäßigkeit

$$\tan\Phi = \sin\Phi \ / \cos\Phi \qquad\qquad (1)$$

kann durch Division und anschließende arctan-Rechnung auf den Drehwinkel Φ rückgerechnet werden. Die beiden Empfängerspulen 134, 136 sollten dazu um den Winkel β/4 zueinander verschoben sein, um eine elektrische Phasenverschiebung von 90° zu gewährleisten. Mögliche Offsets der beiden Spulensignale können in der Praxis kompensiert werden, beispielsweise durch eine entsprechende Kalibrierung.

In Figur 3 ist ein weiteres Beispiel eines induktiven Positionssensors 124 dargestellt, in dem das Empfängerspulensystem 130 genau drei Empfängerspulen 132 umfasst, nämlich eine erste Empfängerspule 134, eine zweite Empfängerspule 136 und eine dritte Empfängerspule 144. Die erste Empfängerspule 134 weist zwei direkt aufeinanderfolgende erste Teilwindungen 138 auf. Dabei weisen die beiden ersten Teilwindungen 138 dieselbe Periode sowie beispielsweise dieselbe Amplitude auf. Die beiden ersten Teilwindungen 138 der ersten Empfängerspule 134 können, wie in Figur 3 zu sehen, gegenläufig orientiert sein. Insbesondere können die beiden ersten Teilwindungen 138 der ersten Empfängerspule 134 derart gegenläufig orientiert sein, dass sich die beiden ersten Teilwindungen 138 in mindestens einem Kreuzungspunkt 140 kreuzen. In dem in Figur 3 dargestellten Beispiel weisen die beiden ersten Teilwindungen 138 der ersten Empfängerspule 134 genau einen Kreuzungspunkt 140 auf, welcher sich vorzugsweise bei der Hälfte des Winkelabstands β, also bei β/2 befindet. Am rechten Ende der in Figur 3 dargestellten Anordnung sind die beiden ersten Teilwindungen 138 in einem Knoten 141 miteinander verbunden.

Die zweite Empfängerspule 136 weist in dem in Figur 3 dargestellten Beispiel zwei aufeinanderfolgenden zweiten Teilwindungen 142 auf, welche durch einen geraden Abschnitt 143 verbunden sind. Dabei weisen die beiden zweiten Teilwindungen 142 dieselbe Periode sowie beispielsweise dieselbe Amplitude auf. Die beiden zweiten Teilwindungen 142 der zweiten Empfängerspule 136 können, wie in Figur 3 zu sehen, gegenläufig orientiert sein.

Insbesondere können die beiden zweiten Teilwindungen 142 der zweiten Empfängerspule 136 derart gegenläufig orientiert sein, dass sich die beiden zweiten Teilwindungen 142 in mindestens einem Kreuzungspunkt 140 kreuzen. In dem in Figur 3 dargestellten Beispiel weisen die beiden zweiten Teilwindungen 142 der zweiten Empfängerspule 136 genau zwei Kreuzungspunkte 140 auf.

Die dritte Empfängerspule 144 weist in dem in Figur 3 dargestellten Beispiel zwei aufeinanderfolgende dritte Teilwindungen 146 auf, welche durch einen geraden Abschnitt 143 verbunden sind. Dabei weisen die beiden dritten Teilwindungen 146 dieselbe Periode sowie beispielsweise dieselbe Amplitude auf. Die beiden dritten Teilwindungen 146 der dritten Empfängerspule 144 können, wie in Figur 3 zu sehen, gegenläufig orientiert sein. Insbesondere können die beiden dritten Teilwindungen 146 der dritten Empfängerspule 144 derart gegenläufig orientiert sein, dass sich die beiden dritten Teilwindungen 146 in mindestens einem Kreuzungspunkt 140 kreuzen. In dem in Figur 3 dargestellten Beispiel weisen die beiden dritten Teilwindungen 146 der dritten Empfängerspule 144 genau zwei Kreuzungspunkte 140 auf.

Die Abstände des Kreuzungspunkts 140 der ersten Empfängerspule 134 zu den Kreuzungspunkten 140 der zweiten Empfängerspule 136, sowie die Abstände des Kreuzungspunkts 140 der ersten Empfängerspule 134 zu den Kreuzungspunkten 140 der dritten Empfängerspule 144, sowie die Abstände der Kreuzungspunkte 140 der zweiten Empfängerspule 136 zu den Kreuzungspunkten 140 der dritten Empfängerspule 144 können sich aus dem Phasenversatz der ersten Empfängerspule 134 zu der zweiten Empfängerspule 136 sowie dem Phasenversatz der ersten Empfängerspule 134 zu der dritten Empfängerspule 144 sowie dem Phasenversatz der zweiten Empfängerspule 136 zu der dritten Empfängerspule 144 ergeben.

Mit der Ausgestaltung gemäß Figur 3 ist im Vergleich zu der Ausgestaltung gemäß Figur 2 eine robustere Messung möglich, und es lässt sich ein Dreiphasensystem realisieren. Hier sind beispielsweise die drei Empfängerspulen 134, 136, 144 jeweils um β/3 zueinander verschoben, woraus sich ein Dreiphasensystem mit 120° elektrischer Phasenverschiebung ergibt. Aus diesem kann beispielsweise nach Durchführung einer Clarke-Transformation ein offsetfreies sin/cos-System generiert werden, welches dann mittels einer arctan-Rechnung in den Drehwinkel transferiert werden kann. Die Spulenstrukturen sind vorzugsweise so ausgeführt, dass sie jeweils den kompletten Bereich β ausfüllen.

In Figur 4 ist ein Ausführungsbeispiel eines induktiven Positionssensors 124 dargestellt, welcher zwei Empfängerspulensysteme 130, umfassend jeweils genau drei Empfängerspulen 132, umfasst. Eine Ausführung mit einer Vielzahl Empfängerspulensysteme 130 ist ebenfalls möglich. Insbesondere können die mindestens zwei Empfängerspulensysteme 130 die gleiche Anzahl Empfängerspulen 132, insbesondere aber auch eine unterschiedliche Anzahl Empfängerspulen 132, umfassen.

Die mindestens zwei Empfängerspulensysteme 130 können in Umfangsrichtung des mindestens einen Geberrads 114 parallel zueinander und axial bezüglich der Rotationsachse 112 des mindestens einen Geberrads 114 zueinander versetzt angeordnet sein.

Die beiden in Figur 4 dargestellten Empfängerspulensysteme 130 können jeweils in ihrem Aufbau dem in Figur 3 dargestellten Empfängerspulensystem 130 mit genau drei Empfängerspulen 132 gleichen, abgesehen von der jeweiligen Periode. Die in Figur 4 dargestellten Empfängerspulen 132 der Empfängerspulensysteme 130 können innerhalb eines Empfängerspulensystems 130 jeweils gleiche Periodizität aufweisen. Insbesondere können sich die Periodizitäten der Empfängerspulen 132 des ersten Empfängerspulensystems 148 von den Periodizitäten der Empfängerspulen 132 des zweiten Empfängerspulensystems 150 jedoch unterscheiden. Jedem der Empfängerspulensysteme 130 kann ein separates Geberrad 114 zugeordnet sein. Insbesondere kann dem ersten Empfängerspulensystem 148 ein erstes Geberrad zugeordnet sein, welches in den Figuren nicht dargestellt ist und beispielsweise analog zu Figur 1 ausgestaltet sein kann. Das erste Geberrad kann beispielsweise zwischen zwei benachbarten Profilelementen des ersten Geberrads einen Winkelabstand $\beta_1$ aufweisen. Das dem ersten Geberrad zugeordnete erste Empfängerspulensystem 148 kann dabei eine Periodizität aufweisen. Wie in Figur 4 abgebildet, kann insbesondere die Periodizität des ersten Empfängerspulensystems 148 einem ganzzahligen Vielfachen von $\beta_1$ entsprechen.

Insbesondere kann einem zweiten Empfängerspulensystem 150 ein zweites Geberrad zugeordnet sein, welches ebenfalls in den Figuren nicht dargestellt ist und welches analog zu Figur 1 ausgestaltet sein kann. Das zweite Geberrad kann beispielsweise axial zu dem ersten Geberrad verschoben sein, beispielsweise senkrecht zur Zeichenebene in Figur 1. Das zweite Geberrad kann beispielsweise zwischen zwei benachbarten Profilelementen des zweiten Geberrads einen Winkelabstand $\beta_2$ aufweisen, welches sich vorzugsweise vom Winkelabstand $\beta_1$ unterscheidet. Das dem zweiten Geberrad zugeordnete zweite Empfängerspulensystem 150 kann dabei eine Periodizität aufweisen. Wie in Figur 4 abgebildet, kann insbesondere die Periodizität des zweiten Empfängerspulensystems 150 einem ganzzahligen Vielfachen von $\beta_2$ entsprechen. Der Winkelabstand $\beta_2$ zwischen zwei benachbarten Profilelementen des zweiten Geberrads kann sich von dem Winkelabstand $\beta_1$ zwischen zwei benachbarten Profilelementen des ersten Geberrads unterscheiden.

Die Spulenanordnung 126 kann mindestens zwei Empfängerspulensysteme 130 umfassen. Beispielsweise kann den mindestens zwei Empfängerspulensystemen 130 eine gemeinsame Erregerspule 128 zugeordnet sein, wie in dem in Figur 4 dargestellten Ausführungsbeispiel zu sehen ist. Alternativ oder zusätzlich kann auch genau einem Empfängerspulensystem 130 genau eine Erregerspule 128 zugeordnet sein, wie in den in den Figuren 2 und 3 abgebildeten Beispielen dargestellt ist. Insbesondere kann die Erregerspule 128 das ihr zugeordnete mindestens eine Empfängerspulensystem 130 umschließen. Beispielsweise kann eine Erregerspule 128 genau ein ihr zugeordnetes Empfängerspulensystem 130 umschließen, wie in den Figuren 2 und 3 dargestellt. Beispielsweise kann eine Erregerspule 128 auch mindestens zwei ihr zugeordnete Empfängerspulensysteme 130 gemeinsam umschließen, wie in Figur 4 zu sehen ist.

Die in Figur 4 gezeigte Anordnung kann verwendet werden, um eine Absolutwinkelmessung mit 360°-Messbereich zu realisieren. Hierzu werden, wie oben ausgeführt, die beiden Empfängerspulensysteme 148, 150 eingesetzt, die jeweils mit einem eigenen Geberrad 114 wechselwirken können. Diese sollten jeweils einen anderen Messbereich $\beta_1$, $\beta_2$ aufweisen, wie in Figur 4 gezeigt. Eine Anregung kann, wie ebenfalls in Figur 4 erkennbar, durch eine gemeinsame umlaufende Erregerspule 128 erfolgen. Alternativ könnten auch separate Erregerspulen 128 vorgesehen sein. Aus den Einzelwinkeln der beiden Empfängerspulensysteme 148, 150 kann dann beispielsweise über ein Noniusprinzip mit einem 360°-Eindeutigkeitsbereich auf den Drehwinkel Φ rückgerechnet werden.

**Patentansprüche**

1. Sensorsystem (110) zur Bestimmung mindestens einer Rotationseigenschaft eines um mindestens eine Rotationsachse (112) rotierenden Elements (113), wobei das Sensorsystem (110) mindestens zwei mit dem rotierenden Element (113) verbindbare Geberräder (114) aufweist, wobei die Geberräder (114) ein Geberradprofil (116) aufweisen,
wobei das Sensorsystem (110) mindestens einen induktiven Positionssensor (124) aufweist, wobei der induktive Positionssensor (124) mindestens eine Spulenanordnung (126) aufweist, umfassend mindestens eine Erregerspule (128) und mindestens zwei Empfängerspulen (132), wobei die Empfängerspulen (132) zumindest abschnittsweise sinusförmig geformt sind, **dadurch gekennzeichnet, dass** die Spulenanordnung (126) zwei Empfängerspulensysteme (130) aufweist, die in Umfangsrichtung der mindestens zwei Geberräder (114) parallel zueinander und axial bezüglich der Rotationsachse (112) der mindestens zwei Geberräder (114) zueinander versetzt angeordnet sind, wobei ein erstes Empfängerspulensystem (148) und ein zweites Empfängerspulensystem (150) jeweils genau drei Empfängerspulen (132) aufweisen, wobei die Empfängerspulen (132) innerhalb eines Empfängerspulensystems (130) phasenversetzt zueinander angeordnet sind und jeweils gleiche Periodizität aufweisen, wobei sich die Periodizität der Empfängerspulen (132) des ersten Empfängerspulensystems (148) von der Periodizität der Empfängerspulen (132) des zweiten Empfängerspulensystems (150) unterscheidet, wobei dem ersten Empfängerspulensystem (148) ein erstes Geberrad (114) und dem zweiten Empfängerspulensystem (150) ein zweites Geberrad (114) zugeordnet ist, wobei das erste Geberrad (114) zwischen zwei benachbarten Profilelementen des ersten Geberrades (114) einen Winkelabstand β1 aufweist und die Empfängerspulen (132) des dem ersten Geberrad (114) zugeordneten ersten Empfängerspulensystems (148) eine Periodizität aufweisen, die einem ganzzahligen Vielfachen von β1 entspricht, wobei das zweite Geberrad (114) zwischen zwei benachbarten Profilelementen des zweiten Geberrades (114) einen Winkelabstand β2 aufweist und die Empfängerspulen (132) des dem zweiten Geberrad (114) zugeordneten zweiten Empfängerspulensystems (150) eine Periodizität aufweist, die einem ganzzahligen Vielfachen von β2 entspricht, und wobei der Winkelabstand β2 zwischen zwei benachbarten Profilelementen des zweiten Geberrads sich von dem Winkelabstand β1 zwischen zwei benachbarten Profilelementen des ersten Geberrads unterscheidet.

2. Sensorsystem (110) nach dem vorhergehenden Anspruch, wobei die Empfängerspulen (132) jedes der beiden Empfängerspulensysteme (130) derart angeordnet sind, dass diese bei einer Rotation des rotierenden Elements (113) mit konstanter Winkelgeschwindigkeit um die Rotationsachse (112) sinusförmige Signale generieren, wobei die sinusförmigen Signale der drei Empfängerspulen (132) jedes Empfängerspulensystems (130) jeweils derart gegeneinander phasenversetzt sind, dass benachbarte sinusförmige Signale einen Phasenabstand von 120° aufweisen.

3. Sensorsystem (110) nach einem der vorhergehenden Ansprüche, wobei die drei Empfängerspulen (132) jedes der beiden Empfängerspulensysteme (130) jeweils aus mindestens zwei Teilwindungen (138, 142, 146) bestehen, wobei die aufeinanderfolgenden Teilwindungen (138, 142, 146) gegenläufig orientiert sind.

4. Sensorsystem (110) nach einem der vorhergehenden Ansprüche, wobei jede der drei Empfängerspulen (132) eines Empfängerspulensystems (130) in mindestens einer Winkelposition mindestens ein Profilelement (118) und mindestens einen Zwischenraum zwischen zwei Profilelementen (118) des diesem Empfängerspulensystems zugeordneten Geberrads (114) abdeckt.

5. Sensorsystem (110) nach einem der vorhergehenden Ansprüche, wobei das Sensorsystem (110) eine Auswerteschaltung (122) aufweist, wobei die Auswerteschaltung (122) eingerichtet ist, um aus Signalen der Empfängerspulen (132) auf eine Winkelposition Φ des Geberrads (114) zu schließen.

6. Verfahren zur Bestimmung mindestens einer Rotationseigenschaft eines um mindestens eine Rotationsachse (112) rotierenden Elements (113), wobei das Verfahren die Verwendung mindestens eines Sensorsystems (110) nach einem der vorhergehenden Ansprüche umfasst, wobei das Verfahren weiterhin folgende Schritte umfasst:

   - Aufnehmen mindestens zweier induktiver Signale mittels der Empfängerspulen (132);
   - Auswertung der induktiven Signale und Ermittlung der Rotationseigenschaft mittels der induktiven Signale.

## Claims

**1.** Sensor system (110) for determining at least one rotation characteristic of an element (113) rotating about at least one axis of rotation (112), wherein the sensor system (110) has at least two encoder wheels (114) that can be connected to the rotating element (113), the encoder wheels (114) having an encoder wheel profile (116), wherein the sensor system (110) has at least one inductive position sensor (124), the inductive position sensor (124) having at least one coil assembly (126), comprising at least one exciter coil (128) and at least two receiver coils (132), wherein the receiver coils (132) are at least partly sinusoidally shaped, **characterized in that** the coil assembly (126) has two receiver coil systems (130) which, in the circumferential direction of the at least two encoder wheels (114), are arranged parallel to each other and offset axially from each other with respect to the axis of rotation (112) of the at least two encoder wheels (114), wherein a first receiver coil system (148) and a second receiver coil system (150) each have exactly three receiver coils (132), wherein the receiver coils (132) are arranged with a phase offset from one another within a receiver coil system (130) and each have the same periodicity, wherein the periodicity of the receiver coils (132) of the first receiver coil system (148) differs from the periodicity of the receiver coils (132) of the second receiver coil system (150), wherein the first receiver coil system (148) is assigned a first encoder wheel (114), and the second receiver coil system (150) is assigned a second encoder wheel (114), wherein the first encoder wheel (114) has an angular spacing $\beta1$ between two adjacent profile elements of the first encoder wheel (114), and the receiver coils (132) of the first receiver coil system (148) assigned to the first encoder wheel (114) have a periodicity which corresponds to an integer multiple of $\beta1$, wherein the second encoder wheel (114) has an angular spacing $\beta2$ between two adjacent profile elements of the second encoder wheel (114), and the receiver coils (132) of the second receiver coil system (150) assigned to the second encoder wheel (114) have a periodicity which corresponds to an integer multiple of $\beta2$, and wherein the angular spacing $\beta2$ between two adjacent profile elements of the second encoder wheel differs from the angular spacing $\beta1$ between two adjacent profile elements of the first encoder wheel.

**2.** Sensor system (110) according to the preceding claim, wherein the receiver coils (132) of each of the two receiver coil systems (130) are arranged in such a way that these generate sinusoidal signals during a rotation of the rotating element (113) with a constant angular velocity about the axis of rotation (112), wherein the sinusoidal signals from the three receiver coils (132) of each receiver coil system (130) each have a phase offset relative to each other such that adjacent sinusoidal signals have a phase spacing of 120°.

**3.** Sensor system (110) according to one of the preceding claims, wherein the three receiver coils (132) of each of the two receiver coil systems (130) each consist of at least two partial windings (138, 142, 146), the successive partial windings (138, 142, 146) each being oriented in opposite directions.

**4.** Sensor system (110) according to one of the preceding claims, wherein, in at least one angular position, each of the three receiver coils (132) of a receiver coil system (130) covers at least one profile element (118) and at least one gap between two profile elements (118) of the encoder wheel (114) assigned to this receiver coil system.

**5.** Sensor system (110) according to one of the preceding claims, wherein the sensor system (110) has an evaluation circuit (122), wherein the evaluation circuit (122) is set up to deduce an angular position $\Phi$ of the encoder wheel (114) from signals from the receiver coils (132).

**6.** Method for determining at least one rotation characteristic of an element (113) rotating about at least one axis of rotation (112), wherein the method comprises the use of at least one sensor system (110) according to one of the preceding claims, wherein the method further comprises the following steps:

- picking up at least two inductive signals by means of the receiver coils (132);
- evaluating the inductive signals and determining the rotation characteristic by means of the inductive signals.

## Revendications

**1.** Système de détection (110) destiné à déterminer au moins une propriété de rotation d'un élément (113) rotatif sur au moins un axe de rotation (112), le système de détection (110) comportant au moins deux roues de codage (114) qui peuvent être reliées à l'élément rotatif (113), les roues de codage (114) ayant un profil de roue de codage (116), le système de détection (110) comprenant au moins un capteur de position inductif (124), le capteur de position inductif (124) comportant au moins un ensemble de bobines (126), qui comprend au moins une bobine excitatrice (128) et au moins deux bobines réceptrices (132), les bobines réceptrices (132) étant formées au moins par endroits de manière sinusoïdale, **caractérisé en ce que**
l'ensemble de bobines (126) comporte deux systèmes de bobines réceptrices (130) qui sont agencés parallèlement l'un à l'autre dans la direction périphérique des au moins deux roues de codage (114) et décalés axialement l'un par rapport à l'autre par rapport à l'axe de rotation (112) des au moins deux roues de codage (114), un premier système de bobines réceptrices (148) et un deuxième système de bobines réceptrices (150) comportant respectivement exactement trois bobines réceptrices (132), les bobines réceptrices (132) étant agencées de manière déphasée les unes par rapport aux autres à l'intérieur d'un système de bobines réceptrices (130) et ayant respectivement la même périodicité, la périodicité des bobines réceptrices (132) du premier système de bobines réceptrices (148) étant différente de la périodicité des bobines réceptrices (132) du deuxième système de bobines réceptrices (150), une première roue de codage (114) étant associée au premier système de bobines réceptrices (148) et une deuxième roue de codage (114) étant associée au deuxième système de bobines réceptrices (150), la première roue de codage (114) présentant une distance angulaire $\beta1$ entre deux éléments de profil adjacents de la première roue de codage (114) et les bobines réceptrices (132) du premier système de bobines réceptrices (148) associé à la première roue de codage (114) présentant une périodicité qui correspond à un multiple entier de $\beta1$, la deuxième roue de codage (114) présentant une distance angulaire $\beta2$ entre deux éléments de profil adjacents de la deuxième roue de codage (114) et les bobines réceptrices (132) du deuxième système de bobines réceptrices (150) associé à la deuxième roue de codage (114) présentant une périodicité qui correspond à un multiple entier de $\beta2$, et la distance angulaire $\beta2$ entre deux éléments de profil adjacents de la deuxième roue de codage étant différente de la distance angulaire $\beta1$ entre deux éléments de profil adjacents de la première roue de codage.

2.  Système de détection (110) selon la revendication précédente, les bobines réceptrices (132) de chacun des deux systèmes de bobines réceptrices (130) étant agencées de manière à générer des signaux sinusoïdaux lors d'une rotation de l'élément rotatif (113) à vitesse angulaire constante sur l'axe de rotation (112), les signaux sinusoïdaux des trois bobines réceptrices (132) de chaque système de bobines réceptrices (130) étant respectivement déphasés les uns par rapport aux autres de telle sorte que des signaux sinusoïdaux adjacents présentent un déphasage de 120°.

3.  Système de détection (110) selon l'une des revendications précédentes, les trois bobines réceptrices (132) de chacun des deux systèmes de bobines réceptrices (130) étant respectivement constituées d'au moins deux spires partielles (138, 142, 146), les spires partielles successives (138, 142, 146) étant orientées en sens inverse.

4.  Système de détection (110) selon l'une des revendications précédentes, chacune des trois bobines réceptrices (132) d'un système de bobines réceptrices (130) recouvrant, dans au moins une position angulaire, au moins un élément de profil (118) et au moins un espace intermédiaire entre deux éléments de profil (118) de la roue de codage (114) associée à ce système de bobines réceptrices.

5.  Système de détection (110) selon l'une quelconque des revendications précédentes, le système de détection (110) comportant un circuit d'évaluation (122), le circuit d'évaluation (122) étant conçu pour déduire une position angulaire $\phi$ de la roue de codage (114) à partir de signaux des bobines réceptrices (132).

6.  Procédé de détermination d'au moins une propriété de rotation d'un élément (113) rotatif sur au moins un axe de rotation (112), le procédé comprenant l'utilisation d'au moins un système de détection (110) selon l'une des revendications précédentes, le procédé comprenant en outre :

    - l'acquisition d'au moins deux signaux inductifs au moyen des bobines réceptrices (132);
    - l'évaluation des signaux inductifs et la détermination de la propriété de rotation au moyen des signaux inductifs.

**FIG. 1**

## FIG. 2

128  130  132,134  132,136  124  141

142  138

140  140  140  143

β/2

β

## FIG. 3

128  130  132,134,138  132,136,142  124  132,144,146  141

140  140  140  140  140  143

β/2

β

# FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012213539 A1
- US 20130057263 A
- DE 102004057205 A1
- EP 2851655 A1
- WO 0216864 A1
- EP 0743508 A2
- WO 2016079465 A1
- US 2009261844 A1

**In der Beschreibung aufgeführte Nicht-Patentliteratur**

- Sensoren im Kraftfahrzeug. 2012, 63-74, 120-129